(19) Europäisches Patentamt / European Patent Office / Office européen des brevets

(11) **EP 2 966 487 A1**

(12) **EUROPEAN PATENT APPLICATION**

(43) Date of publication:
13.01.2016 Bulletin 2016/02

(51) Int Cl.:
*G02B 9/60* (2006.01)  *G02B 13/00* (2006.01)
*G02B 13/18* (2006.01)  *G02B 3/04* (2006.01)

(21) Application number: 14192031.4

(22) Date of filing: 06.11.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 09.07.2014  TW 103123674

(71) Applicant: Calin Technology Co., Ltd.
Taichung City 427 (TW)

(72) Inventor: Hsu, Shu-Chuan
402 Taichung City (TW)

(74) Representative: Viering, Jentschura & Partner mbB
Patent- und Rechtsanwälte
Kennedydamm 55 / Roßstrasse
40476 Düsseldorf (DE)

(54) **Optical image pick-up lens**

(57) An optical image pick-up lens (1, 2, 3, 4) includes an aperture (ST), a first lens (L1), a second lens (L2), a third lens (L3), a fourth lens (L4), and a fifth lens (L5) in order along an optical axis (Z) from an object side toward an image side. The first lens (L1) is a positive plastic biconvex lens, the second lens (L2) is a negative plastic meniscus lens, the third lens (L3) is a positive plastic meniscus lens, the fourth lens (L4) is a positive glass meniscus lens, and the fifth lens (L5) is a plastic lens. All the surfaces (S2-S11) of the first to the fifth lenses (L1-L5) are aspheric surfaces. A refractive index of the fourth lens (L4) is greater than 1.7. The fifth lens (L5) gradually changes from negative to positive from a center, where the optical axis (Z) passes through, to an edge.

FIG. 1

EP 2 966 487 A1

**Description**

**BACKGROUND OF THE INVENTION**

**1. Technical Field**

The present invention relates generally to optical lens, and more particularly to an optical image pick-up lens.

**2. Description of Related Art**

With the recent development of mobile devices, the market demand of lens modules increases. In consideration of convenience and portability of the mobile devices, the market prefers miniature and light image pick-up lenses which perform a good optical performance. With the development of miniature and light devices, more and more devices are able to be installed with the miniature image pick-up lenses, including vehicles, video games, and electric appliances.

With the recent development of the miniature mobile devices, the optical image pick-up lenses which are installed in such miniature mobile devices are asked as small as possible. In addition, the optical image pick-up lenses are asked to have a good optical performance to provide high resolution and high contrast. Therefore, miniature and good optical performance are the main requirements of the modem image pick-up lenses.

Besides, the optical image pick-up lenses for the mobile devices are asked to have wide-angle mode. However, the conventional wide-angle image pick-up lenses still have several problems, including insufficient wide angle, distortion, and chromatic difference, so that they could not achieve the desired optical performance.

**BRIEF SUMMARY OF THE INVENTION**

In view of the above, the primary objective of the present invention is to provide an image pick-up lens which has miniature structures, and effectively enhances optical performance in the wide-angle mode.

The present invention provides an optical image pick-up lens including an aperture, a first lens, a second lens, a third lens, a fourth lens, and a fifth lens in order along an optical axis from an object side toward an image side. The first lens is a positive plastic biconvex lens, and has at least an aspheric surface. The second lens is a negative plastic meniscus lens with a convex surface facing the object side and a concave surface facing the image side, and has at least an aspheric surface. The third lens is a positive plastic meniscus lens with a concave surface facing the object side and a convex surface facing the image side, and has at least an aspheric surface. The fourth lens is a positive glass meniscus lens with a concave surface facing the object side and a convex surface facing the image side, and has at least an aspheric surface, wherein the fourth lens has a refractive index greater than 1.7. The fifth lens is a plastic lens, and has two aspheric surfaces facing the object side and the image side respectively, wherein the fifth lens has inflection points on the aspheric surfaces, so that the fifth lens gradually changes from negative to positive from a center, where the optical axis passes through, to an edge.

Whereby, the optical image pick-up lens of the present invention may achieve the purposes of reduction of size and high quantity of light. Besides that it further has a large viewing angle in wide-angle mode.

**BRIEF DESCRIPTION OF THE SEVERAL VIEWS OF THE DRAWINGS**

The present invention will be best understood by referring to the following detailed description of some illustrative embodiments in conjunction with the accompanying drawings, in which

FIG. 1 is a schematic diagram of a first preferred embodiment of the present invention, showing the arrangement of the lenses in wide-angle mode;
FIG. 2A is a field curvature diagram of the optical image pick-up lens of the first preferred embodiment of the present invention;
FIG. 2B is a distortion diagram of the optical image pick-up lens of the first preferred embodiment of the present invention;
FIG. 2C is a chromatic difference of magnification diagram of the optical image pick-up lens of the first preferred embodiment of the present invention;
FIG. 2D is a spherical aberration diagram of the optical image pick-up lens of the first preferred embodiment of the present invention;
FIG. 3 is a schematic diagram of a second preferred embodiment of the present invention, showing the arrangement of the lenses in wide-angle mode;
FIG. 4A is a field curvature diagram of the optical image pick-up lens of the second preferred embodiment of the present invention;

FIG. 4B is a distortion diagram of the optical image pick-up lens of the second preferred embodiment of the present invention;

FIG. 4C is a chromatic difference of magnification diagram of the optical image pick-up lens of the second preferred embodiment of the present invention;

FIG. 4D is a spherical aberration diagram of the optical image pick-up lens of the second preferred embodiment of the present invention;

FIG. 5 is a schematic diagram of a third preferred embodiment of the present invention, showing the arrangement of the lenses in wide-angle mode;

FIG. 6A is a field curvature diagram of the optical image pick-up lens of the third preferred embodiment of the present invention;

FIG. 6B is a distortion diagram of the optical image pick-up lens of the third preferred embodiment of the present invention;

FIG. 6C is a chromatic difference of magnification diagram of the optical image pick-up lens of the third preferred embodiment of the present invention;

FIG. 6D is a spherical aberration diagram of the optical image pick-up lens of the third preferred embodiment of the present invention;

FIG. 7 is a schematic diagram of a fourth preferred embodiment of the present invention, showing the arrangement of the lenses in wide-angle mode;

FIG. 8A is a field curvature diagram of the optical image pick-up lens of the fourth preferred embodiment of the present invention;

FIG. 8B is a distortion diagram of the optical image pick-up lens of the fourth preferred embodiment of the present invention;

FIG. 8C is a chromatic difference of magnification diagram of the optical image pick-up lens of the fourth preferred embodiment of the present invention; and

FIG. 8D is a spherical aberration diagram of the optical image pick-up lens of the fourth preferred embodiment of the present invention.

## DETAILED DESCRIPTION OF THE INVENTION

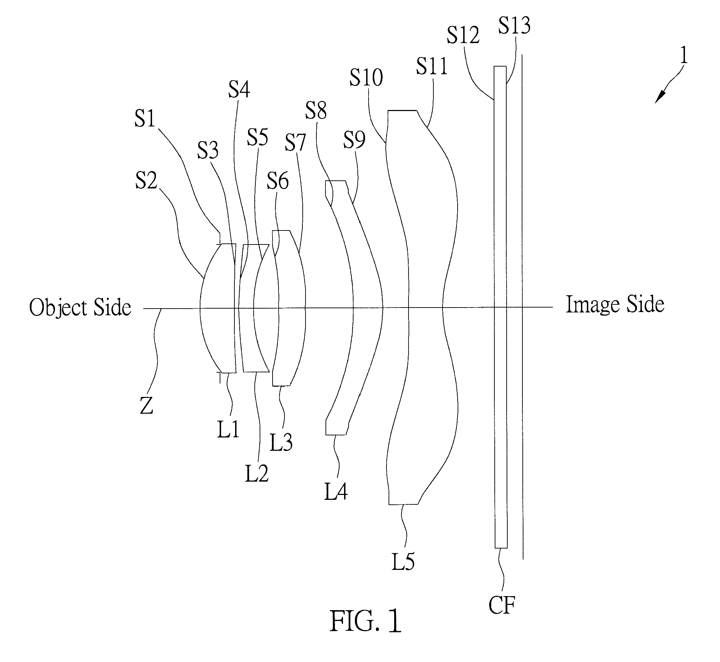

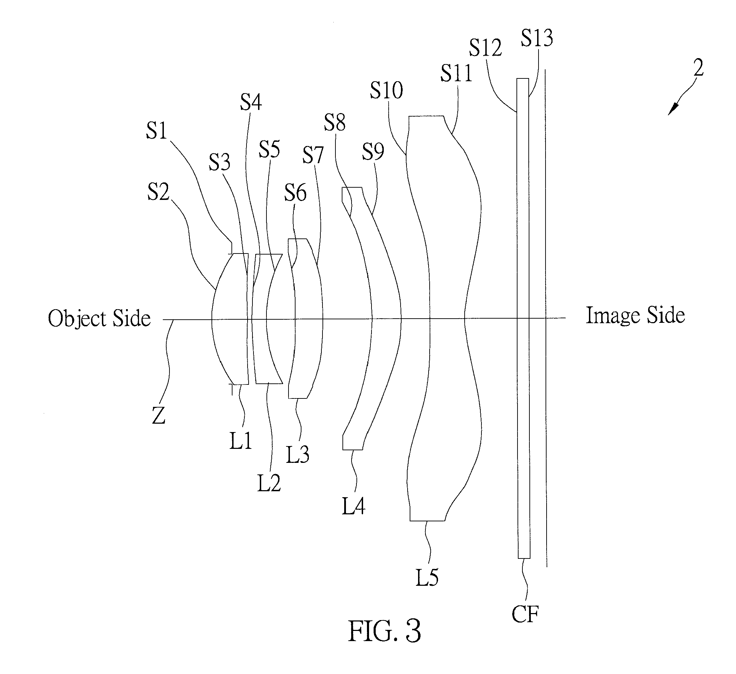

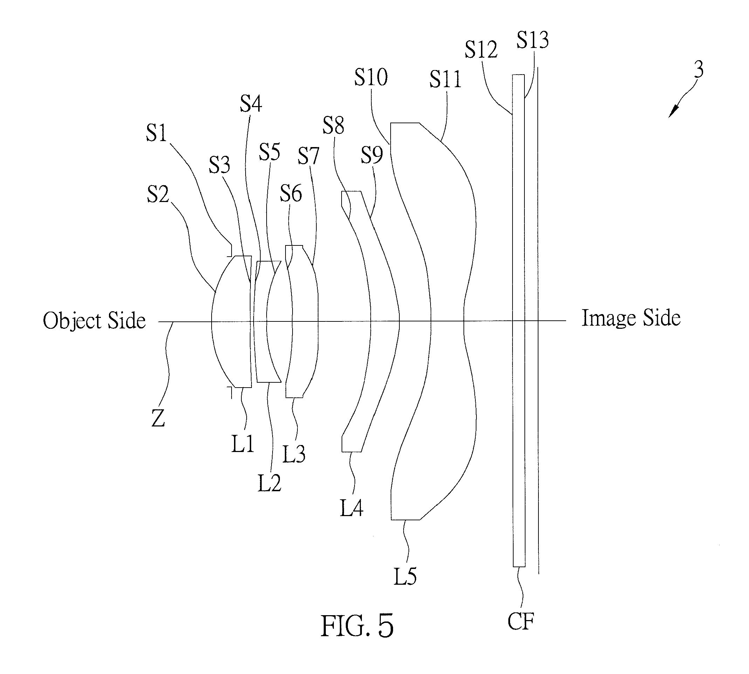

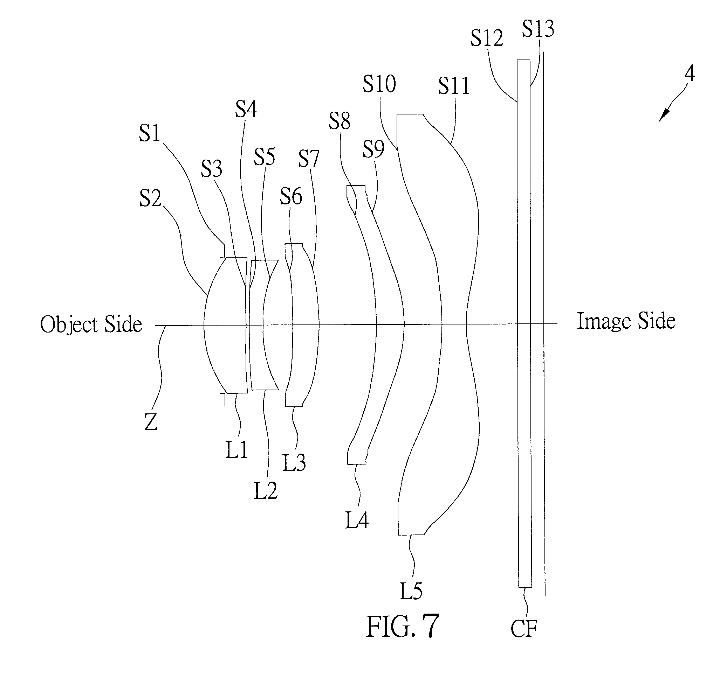

As shown in FIGS. 1, 3, 5 and 7, four optical image pick-up lenses 1-4 are described in the present invention, wherein FIG. 1 shows the optical image pick-up lens 1 of the first preferred embodiment, FIG. 3 shows the optical image pick-up lens 2 of the second preferred embodiment, FIG. 5 shows the optical image pick-up lens 3 of the third preferred embodiment, and FIG. 7 shows the optical image pick-up lens 4 of the fourth preferred embodiment. Each optical image pick-up lens 1-4 sequentially includes an aperture ST, a first lens L1, a second lens L2, a third lens L3, a fourth lens L4, and a fifth lens L5 along an optical axis Z from an object side toward an image side. For some special purpose, an optical filter CF is provided after the fifth lens L5 (between the fifth lens L5 and the image side) to filter noise out.

For all of the optical image pick-up lenses 1-4 of the present invention, the first lens L1 is a positive biconvex lens, the second lens L2 is a negative meniscus lens with a convex surface S4 facing the object side and a concave surface S5 facing the image side, the third lens L3 is a positive meniscus lens with a concave surface S6 facing the object side and a convex surface S7 facing the image side, and the fourth lens L4 is a positive meniscus lens with a concave surface S8 facing the object side and a convex surface S9 facing the image side.

The different part of each preferred embodiment is that the fifth lenses L5 of the first and the second preferred embodiments each has an aspheric surface S10 facing the object side, and the aspheric surface S10 has two inflection points. The aspheric surface S10 has a convex portion between a center, where the optical axis Z passes through, and the inner inflection point. A radius of curvature of the aspheric surface S10 is positive within the inner inflection point, and is negative between the inner and the outer inflection points, and is positive again outsides the outer inflection point. In other words, the radius of curvature of the aspheric surface S10 gradually changes from positive to negative, and to positive again from the center to an edge of the fifth lens. The fifth lens L5 has an aspheric surface S11 facing the object side, and the aspheric surface S11 only has an inflection point. The aspheric surface S11 has a concave portion between the center and the inflection point and a convex portion between the inflection point and the edge. A radius of curvature of the aspheric surface S11 is negative at the center, and gradually changes to positive, and then gradually changes to negative from the center to the edge. As a result, the fifth lens L5 gradually change from negative to positive from the center to the edge.

The fifth lenses L5 of the third and the fourth preferred embodiments each has an aspheric surface S10 facing the object side and an aspheric surface S11 facing the image side. The different part is that the aspheric surface S10 only has an inflection point, and a convex portion between a center, where the optical axis Z passes, and the inflection point. A radius of curvature of the surface S10 gradually changes from negative to positive from the center to an edge of the fifth lens L5. As a result, the fifth lens L5 gradually changes from negative to positive from the center to the edge.

For obtaining a good optical performance, radiuses R of curvatures of each lens surface where the optical axis Z passes through, distances D between each surface and the next surface (or image plane) on the optical axis Z, material refractive indexes Nd of each lens, Abbe numbers Vd of each lens, and focal lengths f of each lens of the optical image pick-up lenses 1-4 of the first to the fourth preferred embodiments of the present invention are listed in Table 1 to Table 4 hereafter:

Table 1

| f = 4.75 mm | | | | | | | |
|---|---|---|---|---|---|---|---|
| surface | R(mm) | D(mm) | material | Nd | Vd | f | |
| S1 | ∞ | -0.3 | | | | | ST |
| S2 | 1.850 | 0.584 | plastic | 1.53 | 55.75 | 3.27 | L1 |
| S3 | -40.299 | 0.090 | | | | | |
| S4 | 5.835 | 0.250 | plastic | 1.64 | 22.46 | -4.89 | L2 |
| S5 | 2.020 | 0.446 | | | | | |
| S6 | -16.531 | 0.459 | plastic | 1.53 | 55.75 | 16.56 | L3 |
| S7 | -5.809 | 0.851 | | | | | |
| S8 | -3.325 | 0.512 | glass | 1.81 | 40.95 | 4.31 | L4 |
| S9 | -1.826 | 0.458 | | | | | |
| S10 | 27.666 | 0.600 | plastic | 1.53 | 55.75 | -3.52 | L5 |
| S11 | 1.747 | 0.900 | | | | | |
| S12 | ∞ | 0.210 | glass | 1.5168 | 64.1 | | CF |
| S13 | ∞ | 0.290 | | | | | |

Table 2

| f= 4.72 mm | | | | | | | |
|---|---|---|---|---|---|---|---|
| surface | R(mm) | D(mm) | material | Nd | Vd | f | |
| S1 | ∞ | -0.3 | | | | | ST |
| S2 | 1.810 | 0.591 | plastic | 1.53 | 55.75 | 3.25 | L1 |
| S3 | -39.968 | 0.080 | | | | | |
| S4 | 6.827 | 0.250 | plastic | 1.64 | 22.46 | -4.92 | L2 |
| S5 | 2.142 | 0.473 | | | | | |
| S6 | -23.975 | 0.471 | plastic | 1.53 | 55.75 | 18.41 | L3 |
| S7 | -7.010 | 0.835 | | | | | |
| S8 | -3.576 | 0.505 | glass | 1.81 | 40.95 | 4.14 | L4 |
| S9 | -1.889 | 0.481 | | | | | |
| S10 | 38.823 | 0.589 | plastic | 1.53 | 55.75 | -3.45 | L5 |
| S11 | 1.746 | 0.887 | | | | | |
| S12 | ∞ | 0.210 | glass | 1.5168 | 64.1 | | CF |
| S13 | ∞ | 0.277 | | | | | |

Table 3

| f = 4.00 mm | | | | | | | |
|---|---|---|---|---|---|---|---|
| surface | R(mm) | D(mm) | material | Nd | Vd | f | |
| S1 | ∞ | -0.3 | | | | | ST |
| S2 | 1.487 | 0.584 | plastic | 1.53 | 55.75 | 2.75 | L1 |
| S3 | -79.619 | 0.090 | | | | | |
| S4 | 7.525 | 0.250 | plastic | 1.64 | 22.46 | -4.31 | L2 |
| S5 | 2.017 | 0.446 | | | | | |
| S6 | -13.787 | 0.459 | plastic | 1.53 | 55.75 | 13.45 | L3 |
| S7 | -4.761 | 0.851 | | | | | |
| S8 | -3.447 | 0.512 | glass | 1.81 | 40.95 | 3.58 | L4 |
| S9 | -1.670 | 0.458 | | | | | |
| S10 | -9.799 | 0.600 | plastic | 1.53 | 55.75 | -2.62 | L5 |
| S11 | 1.659 | 0.900 | | | | | |
| S12 | ∞ | 0.210 | glass | 1.5168 | 64.1 | | CF |
| S13 | ∞ | 0.290 | | | | | |

Table 4

| f = 4.02 mm | | | | | | | |
|---|---|---|---|---|---|---|---|
| surface | R(mm) | D(mm) | material | Nd | Vd | f | |
| S1 | ∞ | -0.3 | | | | | ST |
| S2 | 1.458 | 0.591 | plastic | 1.53 | 55.75 | 2.71 | L1 |
| S3 | -117.070 | 0.080 | | | | | |
| S4 | 8.661 | 0.250 | plastic | 1.64 | 22.46 | -4.12 | L2 |
| S5 | 2.023 | 0.473 | | | | | |
| S6 | -12.135 | 0.471 | plastic | 1.53 | 55.75 | 14.07 | L3 |
| S7 | -4.681 | 0.835 | | | | | |
| S8 | -3.363 | 0.505 | glass | 1.81 | 40.95 | 3.38 | L4 |
| S9 | -1.589 | 0.481 | | | | | |
| S10 | -8.048 | 0.589 | plastic | 1.53 | 55.75 | -2.44 | L5 |
| S11 | 1.577 | 0.887 | | | | | |
| S12 | ∞ | 0.210 | glass | 1.5168 | 64.1 | | CF |
| S13 | ∞ | 0.277 | | | | | |

Among the lenses in the first to the fourth preferred embodiments, a surface concavity z of the aspheric surfaces S2-S11 is defined by the following formula:

$$z = \frac{ch^2}{1+\sqrt{1-(1+k)c^2h^2}} + \alpha_2 h^4 + \alpha_3 h^6 + \alpha_4 h^8 + \alpha_5 h^{10} + \alpha_6 h^{12} + \alpha_7 h^{14} + \alpha_8 h^{16},$$

where z is the surface concavity of the aspheric surface, c is reciprocal of radius of curvature, h is half the off-axis height of surface, k is conic constant, and $\alpha_2$-$\alpha_8$ each is different order coefficient of h.

Aspheric coefficient K and each of the order coefficients $\alpha_2$-$\alpha_8$ of each aspheric surface of the first to the fourth preferred embodiments is listed in Table 5 to Table 8.

Table 5

| Surface | S2 | S3 | S4 | S5 | S6 |
|---|---|---|---|---|---|
| $K$ | 4.2743E-01 | -1.1910E+02 | -3.9536E-01 | -3.4091E+00 | 0.0000E+00 |
| $\alpha_2$ | -2.8764E-03 | 4.0630E-02 | -2.5455E-02 | -4.0109E-03 | -5.1608E-02 |
| $\alpha_3$ | 7.7410E-03 | -1.8010E-02 | 3.7568E-02 | 7.0056E-02 | -2.3997E-02 |
| $\alpha_4$ | -1.6821E-02 | 1.3521E-02 | -3.0960E-02 | -6.3091E-02 | 7.6841E-03 |
| $\alpha_5$ | 1.6671E-02 | 3.4931E-03 | 3.4868E-03 | 3.4737E-02 | 1.2463E-02 |
| $\alpha_6$ | 2.0005E-03 | -1.4562E-02 | 9.0450E-03 | 1.7568E-02 | -6.7033E-03 |
| $\alpha_7$ | -1.2831E-02 | 1.2488E-02 | -3.9475E-03 | -3.2552E-02 | -1.0885E-02 |
| $\alpha_8$ | 7.7094E-03 | -3.4211E-03 | -2.9492E-03 | 1.3645E-02 | 1.0712E-02 |
| Surface | S7 | S8 | S9 | S10 | S11 |
| $K$ | 0.0000E+00 | -4.4756E-04 | -4.7972E+00 | -2.3127E-01 | -7.1776E+00 |
| $\alpha_2$ | -3.3708E-02 | 3.4334E-02 | -1.2986E-02 | -5.9518E-02 | -3.7382E-02 |
| $\alpha_3$ | -2.5068E-02 | -1.5017E-02 | 1.0370E-02 | 1.2979E-02 | 7.3698E-03 |
| $\alpha_4$ | 4.7734E-03 | 2.6761E-03 | -3.8992E-03 | -9.7865E-04 | -1.0866E-03 |
| $\alpha_5$ | 4.7585E-03 | -4.4850E-04 | 9.4254E-04 | -6.3596E-06 | 8.4003E-05 |
| $\alpha_6$ | -2.7321E-03 | -4.0126E-05 | -6.7722E-05 | 4.6368E-06 | -3.5002E-06 |
| $\alpha_7$ | -1.5262E-03 | 5.8811E-05 | -1.5445E-05 | -1.7658E-07 | 1.2951E-07 |
| $\alpha_8$ | 1.6311E-03 | -6.9708E-06 | 2.2680E-06 | 7.8096E-11 | -3.5751E-09 |

Table 6

| Surface | S2 | S3 | S4 | S5 | S6 |
|---|---|---|---|---|---|
| $K$ | 4.3954E-01 | 1.2613E+02 | -2.2265E+00 | -3.4193E+00 | 2.2066E+02 |
| $\alpha_2$ | -4.2239E-03 | 3.9426E-02 | -2.1216E-02 | -5.0099E-03 | -4.9969E-02 |
| $\alpha_3$ | 8.4110E-03 | -1.7641E-02 | 3.7224E-02 | 7.0431E-02 | -2.4930E-02 |
| $\alpha_4$ | -1.7846E-02 | 1.2020E-02 | -3.0485E-02 | -6.2371E-02 | 4.9570E-03 |
| $\alpha_5$ | 1.7051E-02 | 3.9811E-03 | 5.3646E-03 | 3.5173E-02 | 1.1941E-02 |
| $\alpha_6$ | 2.4971E-03 | -1.4298E-02 | 1.0641E-02 | 2.0568E-02 | -6.5035E-03 |
| $\alpha_7$ | -1.3345E-02 | 1.1428E-02 | -4.3497E-03 | -3.1185E-02 | -1.0808E-02 |
| $\alpha_8$ | 6.8733E-03 | -3.3226E-03 | -4.2439E-03 | 1.1510E-02 | 1.1576E-02 |
| Surface | S7 | S8 | S9 | S10 | S11 |
| $K$ | 9.3680E-01 | 6.7602E-02 | -5.0674E+00 | -3.3214E+01 | -7.1293E+00 |
| $\alpha_2$ | -3.4076E-02 | 3.2424E-02 | -1.4508E-02 | -5.9522E-02 | -3.6411E-02 |
| $\alpha_3$ | -2.5979E-02 | -1.4973E-02 | 1.0287E-02 | 1.3004E-02 | 7.3369E-03 |
| $\alpha_4$ | 4.1294E-03 | 2.7132E-03 | -3.9031E-03 | -9.7681E-04 | -1.0878E-03 |
| $\alpha_5$ | 4.8052E-03 | -4.5263E-04 | 9.4286E-04 | -6.2563E-06 | 8.3974E-05 |

(continued)

| Surface | S7 | S8 | S9 | S10 | S11 |
|---|---|---|---|---|---|
| $\alpha_6$ | -2.8057E-03 | -4.3082E-05 | -6.7708E-05 | 4.6392E-06 | -3.4972E-06 |
| $\alpha_7$ | -1.5423E-03 | 5.7845E-05 | -1.5413E-05 | -1.7672E-07 | 1.3068E-07 |
| $\alpha_8$ | 1.5797E-03 | -7.0149E-06 | 2.2668E-06 | 8.5608E-11 | -3.4682E-09 |

Table 7

| Surface | S2 | S3 | S4 | S5 | S6 |
|---|---|---|---|---|---|
| $K$ | 5.6774E-01 | 0.0000E+00 | -6.7545E-01 | -2.6213E+00 | 2.6445E+01 |
| $\alpha_2$ | -1.7220E-02 | 5.8563E-02 | -2.9803E-02 | -1.1204E-02 | -8.5406E-02 |
| $\alpha_3$ | 2.6704E-02 | -3.4748E-02 | 9.9490E-02 | 1.6230E-01 | -6.0229E-02 |
| $\alpha_4$ | -7.6169E-02 | 3.2270E-02 | -1.0832E-01 | -1.9059E-01 | 2.0726E-02 |
| $\alpha_5$ | 8.0252E-02 | 4.0422E-02 | 2.9303E-02 | 1.7594E-01 | 6.4174E-02 |
| $\alpha_6$ | 2.5201E-02 | -8.2538E-02 | 8.0051E-02 | 1.4934E-01 | -4.9948E-02 |
| $\alpha_7$ | -1.2260E-01 | 6.3973E-02 | -8.4064E-02 | -3.4325E-01 | -1.2114E-01 |
| $\alpha_8$ | 7.7827E-02 | -1.0162E-02 | -1.2336E-03 | 2.0365E-01 | 2.0277E-01 |
| Surface | S7 | S8 | S9 | S10 | S11 |
| $K$ | -3.8090E-01 | 0.0000E+00 | -5.6647E+00 | 4.1204E-01 | -8.8725E+00 |
| $\alpha_2$ | -5.6039E-02 | 4.5957E-02 | -2.0765E-02 | -9.5027E-02 | -6.0021E-02 |
| $\alpha_3$ | -6.2479E-02 | -3.6871E-02 | 2.1725E-02 | 3.1812E-02 | 1.7106E-02 |
| $\alpha_4$ | 1.5925E-02 | 1.0410E-02 | -1.3364E-02 | -3.4585E-03 | -3.5471E-03 |
| $\alpha_5$ | 2.8221E-02 | -2.3847E-03 | 4.8328E-03 | -3.6768E-05 | 4.1149E-04 |
| $\alpha_6$ | -2.1560E-02 | -3.6885E-04 | -4.3546E-04 | 3.2415E-05 | -2.8914E-05 |
| $\alpha_7$ | -1.8245E-02 | 5.8443E-04 | -1.5808E-04 | -1.7770E-06 | 1.1217E-06 |
| $\alpha_8$ | 2.5699E-02 | -1.0651E-04 | 2.8751E-05 | 1.7357E-08 | -4.7015E-09 |

Table 8

| Surface | S2 | S3 | S4 | S5 | S6 |
|---|---|---|---|---|---|
| $K$ | 5.9298E-01 | 0.0000E+00 | -6.3299E-01 | -2.5030E+00 | 1.2328E+01 |
| $\alpha_2$ | -1.5207E-02 | 5.4631E-02 | -4.0566E-02 | -1.2283E-02 | -9.5683E-02 |
| $\alpha_3$ | 3.3186E-02 | -3.5134E-02 | 1.1400E-01 | 1.5063E-01 | -5.5997E-02 |
| $\alpha_4$ | -9.8629E-02 | 5.3715E-02 | -1.2563E-01 | -1.7104E-01 | 1.8920E-02 |
| $\alpha_5$ | 7.8383E-02 | 5.7508E-02 | 1.0691E-02 | 1.8421E-01 | 5.1050E-02 |
| $\alpha_6$ | 5.2706E-02 | -1.3001E-01 | 8.7375E-02 | 1.2611E-01 | -5.9245E-02 |
| $\alpha_7$ | -9.9967E-02 | -7.0806E-03 | -4.1178E-02 | -4.4914E-01 | -1.1863E-01 |
| $\alpha_8$ | 4.1917E-02 | 6.9451E-02 | -4.7165E-02 | 3.4149E-01 | 2.1672E-01 |
| Surface | S7 | S8 | S9 | S10 | S11 |
| $K$ | -2.4960E-01 | 0.0000E+00 | -5.7703E+00 | 7.8024E-02 | -1.0385E+01 |
| $\alpha_2$ | -6.9801E-02 | 4.9511E-02 | -2.1073E-02 | -9.4121E-02 | -6.1330E-02 |

(continued)

| Surface | S7 | S8 | S9 | S10 | S11 |
|---|---|---|---|---|---|
| $\alpha_3$ | -5.4939E-02 | -3.6915E-02 | 2.1446E-02 | 3.1929E-02 | 1.7047E-02 |
| $\alpha_4$ | 1.9377E-02 | 1.0560E-02 | -1.3429E-02 | -3.4525E-03 | -3.5517E-03 |
| $\alpha_5$ | 2.1319E-02 | -2.3048E-03 | 4.8493E-03 | -3.6440E-05 | 4.1112E-04 |
| $\alpha_6$ | -2.7018E-02 | -3.6004E-04 | -4.2877E-04 | 3.2356E-05 | -2.8893E-05 |
| $\alpha_7$ | -1.5949E-02 | 5.9159E-04 | -1.5799E-04 | -1.7910E-06 | 1.1490E-06 |
| $\alpha_8$ | 3.3575E-02 | -1.0687E-04 | 2.9565E-05 | 1.8445E-08 | 3.3462E-09 |

The lenses L1-L5 of the optical image pick-up lenses 1-4 of the present invention further satisfy the following conditions:

$$(1)\ 1.7\ \leqq\ Nd4$$

$$(2)\ 1.70\ \leqq\ f1/R1\ \leqq\ 1.92$$

$$(3)\ -0.96\ \leqq\ f2/f\ \leqq\ -1.13$$

$$(4)\ 3.30\ \leqq\ f3/f\ \leqq\ 3.93$$

$$(5)\ 0.78\ \leqq\ f4/f\ \leqq\ 0.97$$

$$(6)\ -0.53\ \leqq\ f5/f\ \leqq\ -0.80$$

$$(7)\ 0.78\ \leqq\ f/TTL\ \leqq\ 0.96$$

where

Nd4 is a refractive index of the fourth lens L4;
f is a total focal length of the optical image pick-up lens;
R1 is a radius of curvature of the point on the surface S2 facing the object side of the first lens L1 where the optical axis Z passes through;
f1 is a focal length of the first lens L1;
f2 is a focal length of the second lens L2;
f3 is a focal length of the third lens L3;
f4 is a focal length of the fourth lens L4;
f5 is a focal length of the fifth lens L5; and
TTL is a total length of the optical image pick-up lens.

The above equations provide the optical image pick-up lens several characters. Equations (1) and (7) are helpful to reduction of the total length of the optical image pick-up lens, Equations (2), (3), (4), and (5) control the peripheral distortion, modify chromatic difference of magnification, spherical aberration, and field curvature, and Equation (6) reduces the rays emitting through the margin of the fifth lens L5 that may reduce the incident angle and so as to reduce the blending problem because of the large incident angle. In other words, the Equations (1) to (7) may reduce the size of the optical image pick-up lens, and improve aberration and image quality.

The details of the lenses L1-L5 of the optical image pick-up lenses 1-4 are listed in Table 9.

Table 9

|  | First embodiment | Second embodiment | Third embodiment | Fourth embodiment |
|---|---|---|---|---|
| TTL | 5.65 | 5.65 | 4.7 | 4.6 |
| Nd4 | 1.81 | 1.81 | 1.81 | 1.81 |
| f1/R1 | 1.7676 | 1.7956 | 1.8494 | 1.8587 |
| f2/f | -1.0295 | -1.0424 | -1.0775 | -1.0249 |
| f3/f | 3.4863 | 3.9004 | 3.3625 | 3.5000 |
| f4/f | 0.9074 | 0.8771 | 0.8950 | 0.8408 |
| f5/f | -0.7411 | -0.7309 | -0.6550 | -0.6070 |
| f/TTL | 0.8407 | 0.8354 | 0.8511 | 0.8739 |

With the arrangement of the aperture ST and the lenses L1-L5, and the lenses L1-L5 each having aspheric surfaces, it may modify the distortion problem of the optical image pick-up lenses 1-4 in wide-angle mode. Besides, the fourth lens may be made of glass with a refractive index greater than 1.7, the lenses L1-L5 are positive, negative, positive, positive, and negative in the optical axis. With the arrangement of the lenses and the Equations it may obtain a good image quality, a small size, and a low distortion in wide-angle mode.

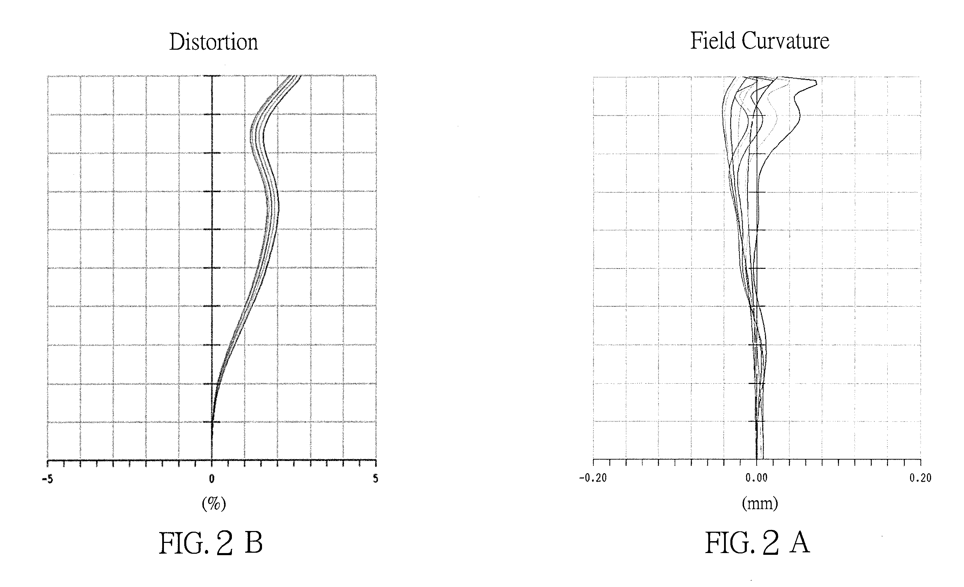

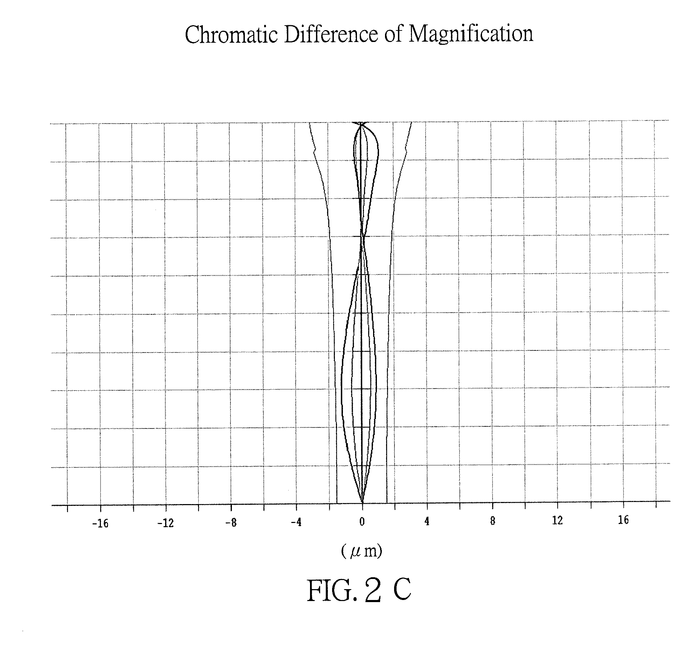

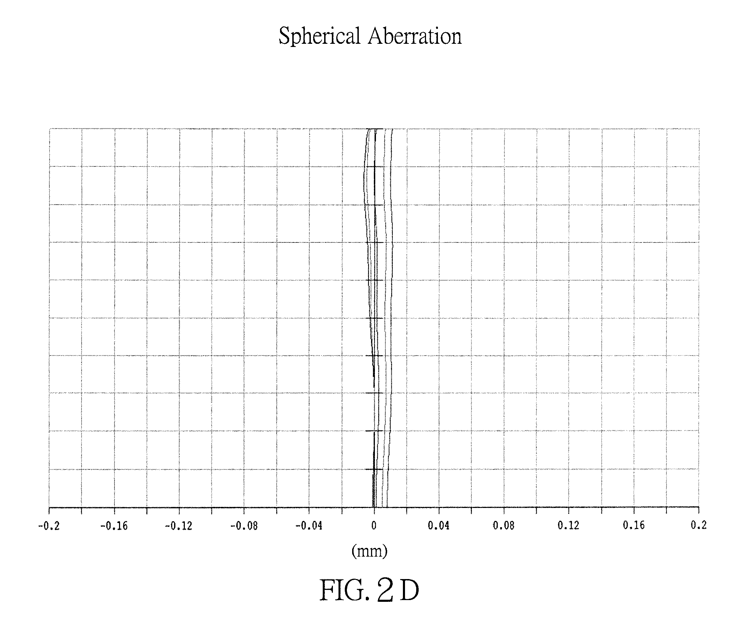

FIG.2A to FIG. 2D show some optical performances of the optical image pick-up lens 1 of the first preferred embodiment of the present invention. FIG. 2A shows that the maximum field curvature doesn't exceed a range between -0.08mm and 0.04mm, FIG. 2B shows that the maximum distortion doesn't exceed a range between -0.5% and 3%, FIG. 2C shows that the maximum chromatic different of magnification doesn't exceed a range between -4 $\mu$m and 4 $\mu$m, and FIG. 2D shows that the maximum spherical aberration doesn't exceed a range between -0.04mm and 0.02mm. The results show that the optical image pick-up lens 1 of the first preferred embodiment provides a good optical performance.

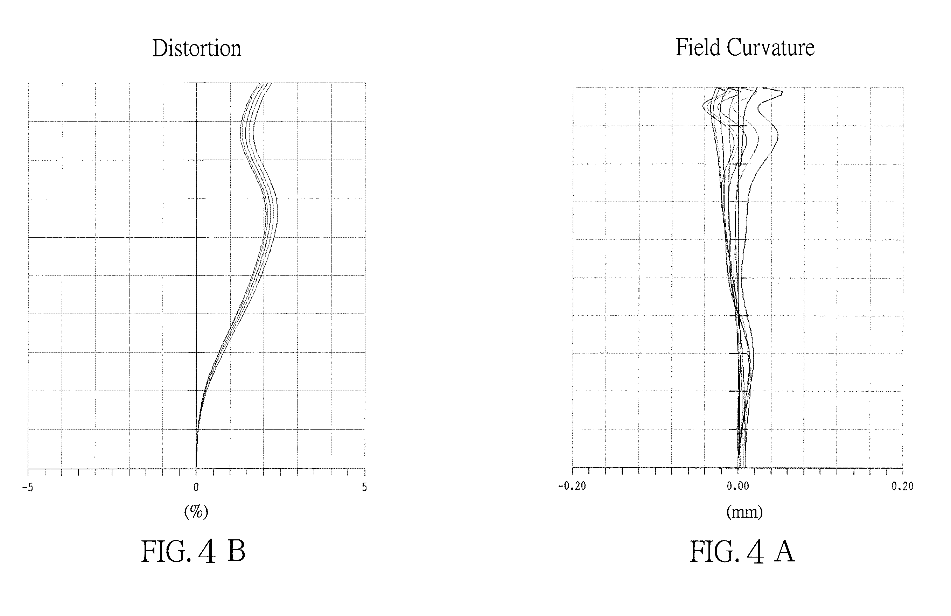

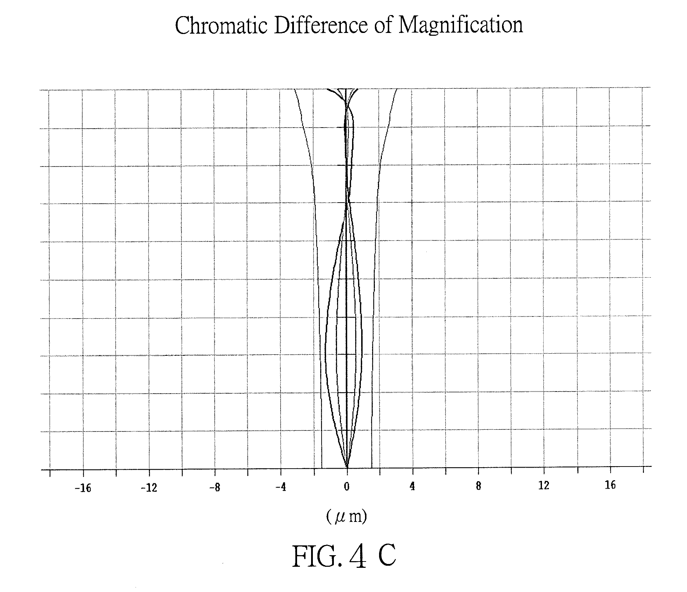

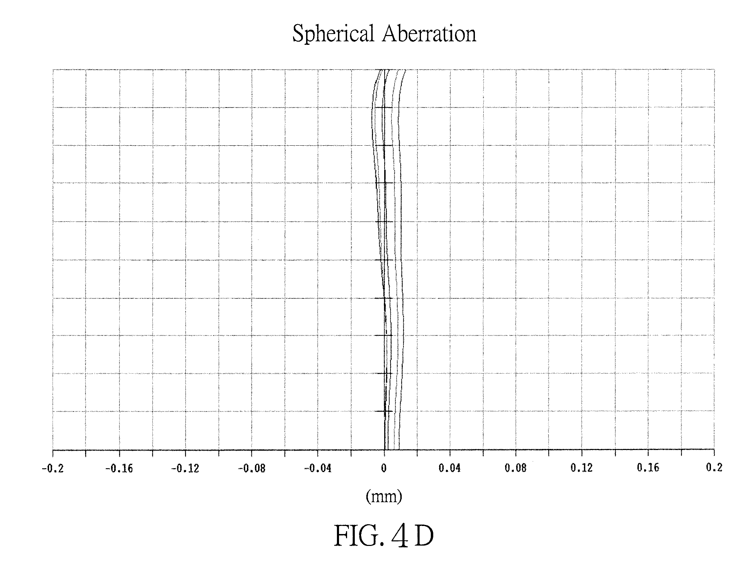

FIG.4A to FIG. 4D show some optical performances of the optical image pick-up lens 2 of the second preferred embodiment of the present invention. FIG. 4A shows that the maximum field curvature doesn't exceed a range between -0.06mm and 0.06mm, FIG. 4B shows that the maximum distortion doesn't exceed a range between -0.5% and 2.5%, FIG. 4C shows that the maximum chromatic different of magnification doesn't exceed a range between -4 $\mu$m and 4 $\mu$m, and FIG. 4D shows that the maximum spherical aberration doesn't exceed a range between -0.02mm and 0.02mm. The results show that the optical image pick-up lens 2 of the second preferred embodiment provides a good optical performance.

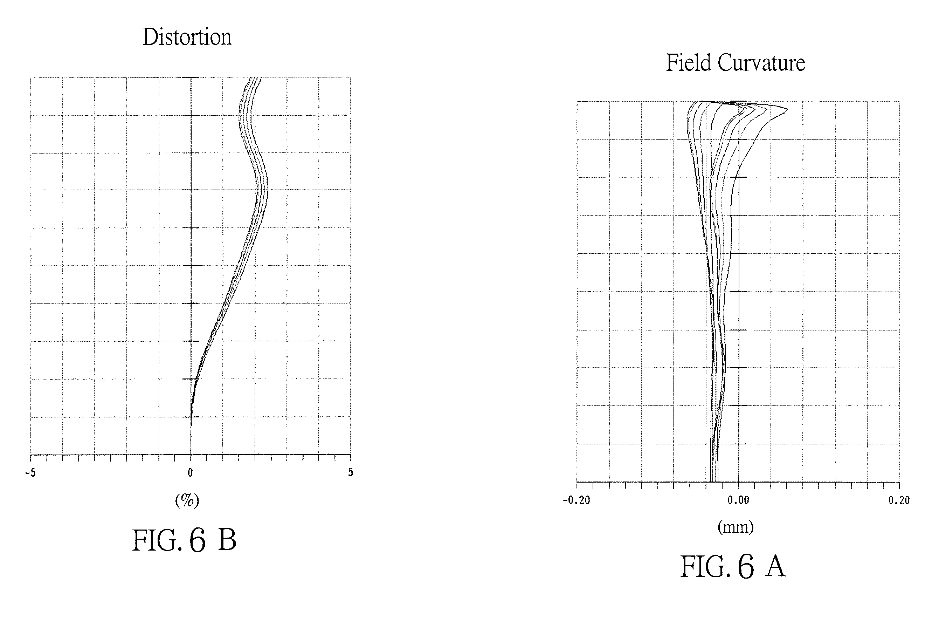

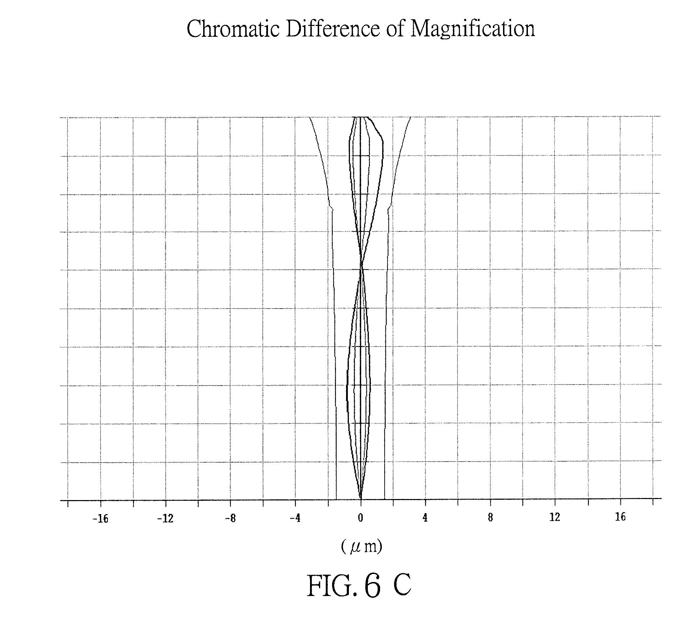

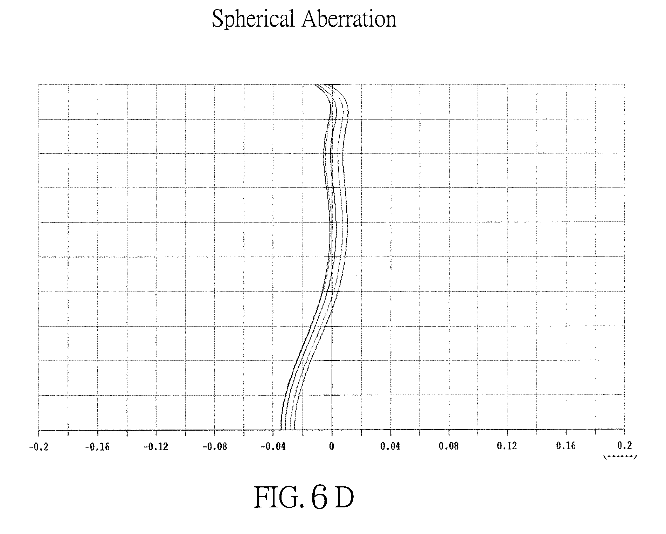

FIG.6A to FIG. 6D show some optical performances of the optical image pick-up lens 3 of the third preferred embodiment of the present invention. FIG. 6A shows that the maximum field curvature doesn't exceed a range between -0.08mm and 0.06mm, FIG. 6B shows that the maximum distortion doesn't exceed a range between -0.5% and 2.5%, FIG. 6C shows that the maximum chromatic different of magnification doesn't exceed a range between -4 $\mu$m and 4 $\mu$m, and FIG. 6D shows that the maximum spherical aberration doesn't exceed a range between -0.04mm and 0.02mm. The results show that the optical image pick-up lens 3 of the third preferred embodiment provides a good optical performance.

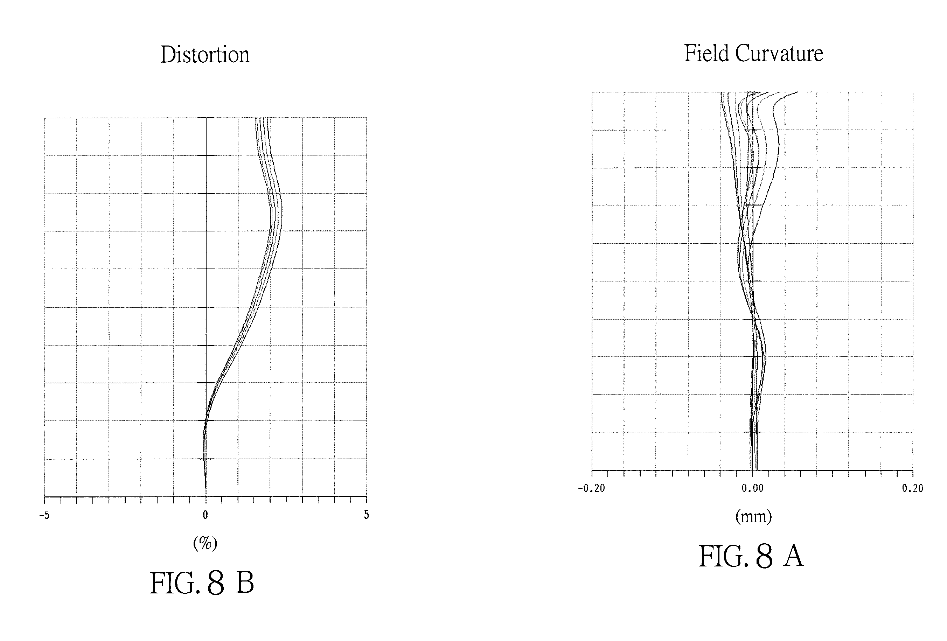

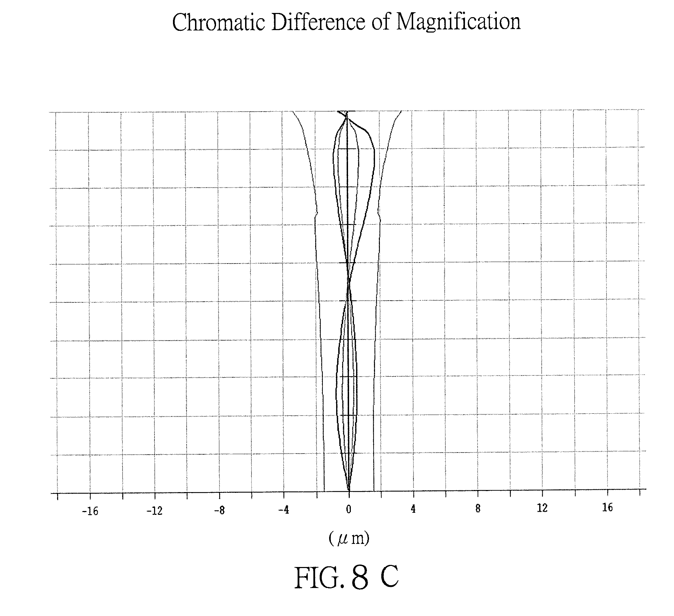

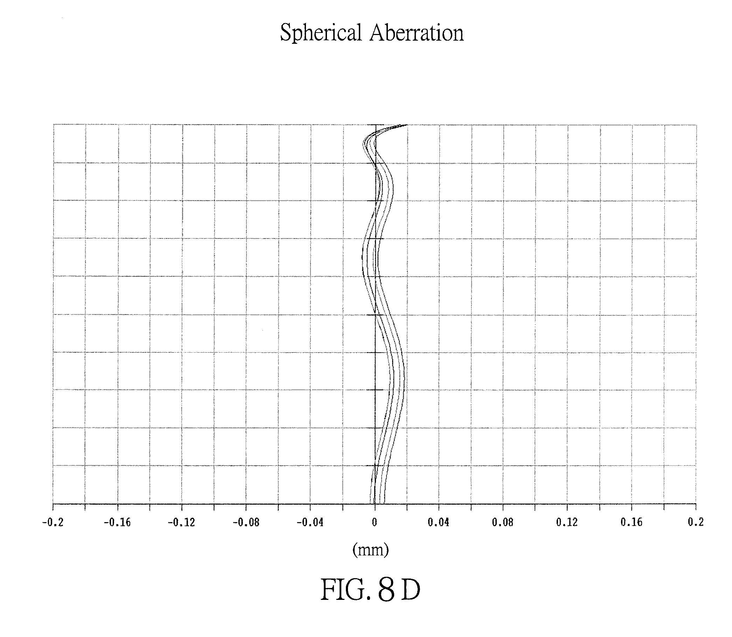

FIG.8A to FIG. 8D show some optical performances of the optical image pick-up lens 4 of the fourth preferred embodiment of the present invention. FIG. 8A shows that the maximum field curvature doesn't exceed a range between -0.06mm and 0.06mm, FIG. 8B shows that the maximum distortion doesn't exceed a range between -0.5% and 2.5%, FIG. 8C shows that the maximum chromatic different of magnification doesn't exceed a range between -4 $\mu$m and 4 $\mu$m, and FIG. 8D shows that the maximum spherical aberration doesn't exceed a range between -0.02mm and 0.02mm. The results show that the optical image pick-up lens 4 of the fourth preferred embodiment provides a good optical performance.

In conclusion, the optical image pick-up lens of the present invention may achieve the purposes of reduction of size and high quantity of light. Besides that it further has a large viewing angle in wide-angle mode.

It must be pointed out that the embodiments described above are only some preferred embodiments of the present invention. All equivalent structures which employ the concepts disclosed in this specification and the appended claims should fall within the scope of the present invention.

**Claims**

1. An optical image pick-up lens (1, 2, 3, 4), along an optical axis (Z) from an object side toward an image side, comprising:

an aperture (ST);
a first lens (L1), which is a positive plastic biconvex lens, and has at least an aspheric surface (S2, S3);
a second lens (L2), which is a negative plastic meniscus lens with a convex surface (S4) facing the object side and a concave surface (S5) facing the image side, and has at least an aspheric surface (S4, S5);
a third lens (L3), which is a positive plastic meniscus lens with a concave surface (S6) facing the object side and a convex surface (S7) facing the image side, and has at least an aspheric surface (S6, S7);
a fourth lens (L4), which is a positive glass meniscus lens with a concave surface (S8) facing the object side and a convex surface (S9) facing the image side, and has at least an aspheric surface (S8, S9), wherein the fourth lens (L4) has a refractive index greater than 1.7; and
a fifth lens (L5), which is a plastic lens, and has two aspheric surfaces (S10, S11) facing the object side and the image side respectively, wherein the fifth lens (L5) has inflection points on the aspheric surfaces, so that the fifth lens (L5) gradually changes from negative to positive from a center, where the optical axis (Z) passes through, to an edge.

2. The optical image pick-up lens (1, 2, 3, 4) of claim 1, wherein both sides of the first lens (L1) are aspheric surfaces.

3. The optical image pick-up lens (1, 2, 3, 4) of claim 1, wherein both sides of the second lens (L2) are aspheric surfaces.

4. The optical image pick-up lens (1, 2, 3, 4) of claim 1, wherein both sides of the third lens (L3) are aspheric surfaces.

5. The optical image pick-up lens (1, 2, 3, 4) of claim 1, wherein both sides of the fourth lens (L4) are aspheric surfaces.

6. The optical image pick-up lens (1, 2) of claim 1, wherein the fifth lens (L5) has a convex portion on the aspheric surface (S10) facing the object side, and the optical axis (Z) passes through the convex portion (S10).

7. The optical image pick-up lens (1, 2) of claim 6, wherein a radius of curvature of the aspheric surface (S10) facing the object side of the fifth lens (L5) gradually changes from positive to negative, and to positive again from the center to the edge.

8. The optical image pick-up lens (3, 4) of claim 1, wherein the fifth lens (L5) has a concave portion on the aspheric surface (S10) facing the object side, and the optical axis (Z) passes through the concave portion.

9. The optical image pick-up lens (3, 4) of claim 8, wherein a radius of curvature of the aspheric surface (S10) facing the object side of the fifth lens (L5) gradually changes from negative to positive from the center to the edge.

10. The optical image pick-up lens (1, 2) of claim 1, wherein the fifth lens (L5) has a concave portion on the aspheric surface (S11) facing the image side, and the optical axis (Z) passes through the concave portion.

11. The optical image pick-up lens (1, 2) of claim 10, wherein a radius of curvature of the aspheric surface (S11) facing the image side of the fifth lens (L5) gradually changes from positive to negative from the center to the edge.

12. The optical image pick-up lens (1, 2, 3, 4) of claim 1, wherein the optical image pick-up lens (1, 2, 3, 4) satisfies:

$$1.70 \leq f1/R1 \leq 1.92,$$

where f1 is a focal length of the first lens (L1), and R1 is the radius of curvature of the point on the surface (S2) facing the object side of the first lens (L1) where the optical axis (Z) passes through.

13. The optical image pick-up lens (1, 2, 3, 4) of claim 1, wherein the optical image pick-up lens (1, 2, 3, 4) satisfies:

$$-0.96 \leq f2/f \leq -1.13,$$

where f2 is a focal length of the second lens (L2), and f is a total focal length of the optical image pick-up lens (1, 2, 3, 4).

14. The optical image pick-up lens (1, 2, 3, 4) of claim 1, wherein the optical image pick-up lens (1, 2, 3, 4) satisfies:

$$3.30 \leqq f3/f \leqq 3.93,$$

where f3 is a focal length of the third lens (L3), and f is a total focal length of the optical image pick-up lens (1, 2, 3, 4).

15. The optical image pick-up lens (1, 2, 3, 4) of claim 1, wherein the optical image pick-up lens (1, 2, 3, 4) satisfies:

$$0.78 \leqq f4/f \leqq 0.97,$$

where f4 is a focal length of the fourth lens (L4), and f is a total focal length of the optical image pick-up lens (1, 2, 3, 4).

16. The optical image pick-up lens (1, 2, 3, 4) of claim 1, wherein the optical image pick-up lens (1, 2, 3, 4) satisfies:

$$-0.53 \leqq f5/f \leqq -0.80,$$

where f5 is a focal length of the fifth lens (L5), and f is a total focal length of the optical image pick-up lens (1, 2, 3, 4).

17. The optical image pick-up lens (1, 2, 3, 4) of claim 1, wherein the optical image pick-up lens (1, 2, 3, 4) satisfies:

$$0.78 \leqq f/TTL \leqq 0.96,$$

where f is a total focal length of the optical image pick-up lens (1, 2, 3, 4), and TTL is a total length of the optical image pick-up lens (1, 2, 3, 4).

FIG. 1

EP 2 966 487 A1

EP 2 966 487 A1

Distortion

Field Curvature

-5          0          5
(%)

-0.20          0.00          0.20
(mm)

FIG. 2 B

FIG. 2 A

Chromatic Difference of Magnification

FIG. 2 C

Spherical Aberration

(mm)

FIG. 2 D

EP 2 966 487 A1

FIG. 3

Field Curvature

(mm)

FIG. 4 A

Distortion

(%)

FIG. 4 B

Chromatic Difference of Magnification

($\mu$m)

FIG. 4 C

EP 2 966 487 A1

EP 2 966 487 A1

Spherical Aberration

(mm)

FIG. 4 D

FIG. 5

Field Curvature

(mm)

FIG. 6 A

Distortion

(%)

FIG. 6 B

Chromatic Difference of Magnification

$(\mu m)$

FIG. 6 C

EP 2 966 487 A1

Spherical Aberration

| -0.2 | -0.16 | -0.12 | -0.08 | -0.04 | 0 | 0.04 | 0.08 | 0.12 | 0.16 | 0.2 |

FIG. 6 D

EP 2 966 487 A1

FIG. 7

Distortion

Field Curvature

-5      0      5

(%)

FIG. 8 B

-0.20      0.00      0.20

(mm)

FIG. 8 A

EP 2 966 487 A1

Chromatic Difference of Magnification

(μm)

FIG. 8 C

EP 2 966 487 A1

Spherical Aberration

-0.2    -0.16    -0.12    -0.08    -0.04    0    0.04    0.08    0.12    0.16    0.2

(mm)

FIG. 8 D

EP 2 966 487 A1

Europäisches
Patentamt

European
Patent Office

Office européen
des brevets

# EUROPEAN SEARCH REPORT

Application Number

EP 14 19 2031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 317 360 A1 (KONICA MINOLTA OPTO INC [JP]) 4 May 2011 (2011-05-04)<br>* figure 10 *<br>* paragraphs [0139], [0151] *<br>* paragraph [0141] - paragraph [0150] *<br>* paragraph [0153] *<br>----- | 1-17 | INV.<br>G02B9/60<br>G02B13/00<br>G02B13/18<br>G02B3/04 |
| Y | US 2011/157725 A1 (BABA TOMOHIKO [JP]) 30 June 2011 (2011-06-30)<br>* paragraph [0090]; table 1 *<br>----- | 1-17 | |

TECHNICAL FIELDS
SEARCHED (IPC)

G02B

The present search report has been drawn up for all claims

| Place of search | Date of completion of the search | Examiner |
|---|---|---|
| Munich | 3 November 2015 | Linke, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

# EP 2 966 487 A1

## ANNEX TO THE EUROPEAN SEARCH REPORT
## ON EUROPEAN PATENT APPLICATION NO.

EP 14 19 2031

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2015

| Patent document cited in search report | | Publication date | Patent family member(s) | | Publication date |
|---|---|---|---|---|---|
| EP 2317360 | A1 | 04-05-2011 | CN | 102132188 A | 20-07-2011 |
| | | | CN | 102981248 A | 20-03-2013 |
| | | | CN | 102981250 A | 20-03-2013 |
| | | | CN | 103033911 A | 10-04-2013 |
| | | | CN | 103064173 A | 24-04-2013 |
| | | | CN | 103064177 A | 24-04-2013 |
| | | | EP | 2317360 A1 | 04-05-2011 |
| | | | EP | 2357505 A2 | 17-08-2011 |
| | | | JP | 4858648 B2 | 18-01-2012 |
| | | | JP | 4947226 B2 | 06-06-2012 |
| | | | JP | 4947235 B2 | 06-06-2012 |
| | | | JP | 4947236 B2 | 06-06-2012 |
| | | | JP | 4947237 B2 | 06-06-2012 |
| | | | JP | 5435072 B2 | 05-03-2014 |
| | | | JP | 2011232772 A | 17-11-2011 |
| | | | JP | 2012073642 A | 12-04-2012 |
| | | | JP | 2012083776 A | 26-04-2012 |
| | | | JP | 2012098737 A | 24-05-2012 |
| | | | JP | 2012163963 A | 30-08-2012 |
| | | | JP | 2012181545 A | 20-09-2012 |
| | | | JP | 2012190037 A | 04-10-2012 |
| | | | JP | 2014029547 A | 13-02-2014 |
| | | | KR | 20110042382 A | 26-04-2011 |
| | | | KR | 20120046329 A | 09-05-2012 |
| | | | US | 2011134305 A1 | 09-06-2011 |
| | | | US | 2012019705 A1 | 26-01-2012 |
| | | | US | 2012021802 A1 | 26-01-2012 |
| | | | US | 2012026369 A1 | 02-02-2012 |
| | | | US | 2012026388 A1 | 02-02-2012 |
| | | | US | 2013169852 A1 | 04-07-2013 |
| | | | US | 2013176469 A1 | 11-07-2013 |
| | | | WO | 2010024198 A1 | 04-03-2010 |
| US 2011157725 | A1 | 30-06-2011 | CN | 102109661 A | 29-06-2011 |
| | | | JP | 5560699 B2 | 30-07-2014 |
| | | | JP | 2011133601 A | 07-07-2011 |
| | | | US | 2011157725 A1 | 30-06-2011 |

EPO FORM P0459

For more details about this annex : see Official Journal of the European Patent Office, No. 12/82

29